# EUROPÄISCHE PATENTSCHRIFT

(11) **EP 3 342 265 B1**
(45) Veröffentlichungstag und Bekanntmachung des Hinweises auf die Patenterteilung: **23.10.2019**
(21) Anmeldenummer: 17205500.6
(22) Anmeldetag: 18.08.2014
(51) Int. Cl.: A01C 7/10, A01C 23/00

(54) **GERÄT ZUM VERTEILEN VON SCHÜTTGUT**
DEVICE FOR THE DISTRIBUTION OF BULK GOODS
APPAREIL DE DISTRIBUTION DU PRODUIT EN VRAC

(30) Priorität: 26.08.2013 DE 202013007590 U
(43) Veröffentlichungstag der Anmeldung: 04.07.2018
(62) Teilanmeldung aus: 14752333.6
(73) Patentinhaber: Hugo Vogelsang Maschinenbau GmbH, 49632 Essen (DE); Prometheus GmbH & Co. KG, 49624 Löningen-Bunnen (DE)
(72) Erfinder: Block, Karl-Heinz, 49624 Löningen (DE); Krampe, Paul, 49632 Essen (DE); Hertwig, Martin, 49632 Essen (DE)
(74) Vertreter: Eisenführ Speiser

(56) Entgegenhaltungen:
- EP-A1- 0 079 018
- EP-A1- 0 322 046
- WO-A1-2012/106544
- US-A1- 2012 168 530
- US-B1- 7 450 019

## Beschreibung

Die Erfindung betrifft ein Gerät zum Verteilen von Schüttgut, insbesondere von Saatgut oder Mineraldünger, auf solche landwirtschaftlichen Nutzflächen.

Geräte der vorbezeichneten Art weisen eine Verteilvorrichtung auf, die mindestens einen an eine Zuführung anschließbaren Eingang und eine Mehrzahl Abgänge aufweist, sowie eine Mehrzahl mit den Abgängen verbundener Leitungen zum Verteilen des Schüttguts auf eine vorbestimmte Arbeitsbreite, wobei die Leitungen an ihrem stromabwärtsseitigen Ende jeweils einen Anschlussabschnitt zur Kopplung mit einer Ausbringvorrichtung aufweisen, wobei die Ausbringvorrichtung insbesondere zum Abgeben des Schüttguts in Richtung der Nutzflächen eingerichtet ist, und wobei jeweils ein Abgang und die mit dem Abgang verbundene Leitung einen Strömungspfad definieren. Der Strömungspfad wird von den mehreren Leitungen definiert. Solche Geräte sind insbesondere im Bereich der Mischfluidausbringung bekannt und weit verbreitet, wobei aber auch zum Ausbringen von Saatgut oder Mineraldünger im Wesentlichen die gleiche Fördertechnik benutzt wird.

Geräte zum Verteilen von Schüttgut, Gülle oder Klärschlamm sind beispielsweise bekannt aus EP 0 322 046, DE 31 43 910, oder DE 29 71 5481.

Bei den bekannten Verteilgeräten sind die Förderleitungen zwischen Verteilvorrichtung und Ausbringvorrichtung meistens als Schlauchleitung ausgebildet, die vom Verteiler kommend ein- oder mehrmals umgelenkt werden, bis sie den Anschluss an der Ausbringvorrichtung erreicht haben.

Als Ausbringvorrichtung werden Abgabedüsen, Sprühdüsen, oder auch Injektionseinrichtungen verwendet, mit denen das Mischfluid bzw. Schüttgut wahlweise in Richtung der Oberfläche abgegeben wird, oder gezielt in die Tiefe der Nutzfläche eingearbeitet werden kann. Letzteres ist auch in Form des von der hiesigen Anmelderin bekannten Strip-Till Verfahren bekannt. Aber auch das Ausbringen im freien Auslauf aus den Schläuchen, der sogenannte Schleppschlauchbetrieb, ist weit verbreitet.

Bei den bekannten Verteilgeräten und Ausbringsystemen kann es aufgrund der Fluidzusammensetzung und der langen Leitungslängen zu teilweisen oder vollständigen Verstopfungen im Strömungspfad kommen. Bei Geräten, deren Ausbringvorrichtungen in den Boden eingreifen, kann es beispielsweise bei Rückwärtsfahrten oder aufgrund bestimmter Bodenzusammensetzungen auch im Bereich der Ausbringvorrichtungen zu solchen Verstopfungen kommen. Werden solche Verstopfungen nicht erkannt, führt dies dazu, dass ganze Reihen einer landwirtschaftlichen Nutzfläche, die von den Verteilgeräten an davor vorgesehenen Fahrzeugen abgefahren werden, nicht mit Mischfluid bzw. Schüttgut versorgt werden. Das führt zu Ertragseinbußen im landwirtschaftlichen Betrieb, die unbedingt vermieden werden sollen. Ebenso kann eine unerkannte Verstopfung auch zur Überdüngung anderer Bereiche führen.

Angesichts der in der Branche immer größer werdenden Verteilgeräte mit immer mehr Abgängen von teilweise über Hundert Strömungspfaden mit entsprechenden Leitungen und Ausbringvorrichtungen und steigendem Anteil an direkt in den Boden injizierenden Geräten wird es zunehmend schwerer für den Anwender, Verstopfungen in einzelnen Strömungspfaden zu erkennen, so dass das Risiko von Ertragsausfällen steigt.

Der Erfindung lag somit die Aufgabe zugrunde, bei Verteilgeräten der eingangs bezeichneten Art eine Verbesserung anzugeben, die das Risiko von Ertragsausfällen im Betrieb minimiert.

Die Erfindung löst die ihr zugrunde liegende Aufgabe bei Geräten der eingangs bezeichneten Art mittels einer Einrichtung zur Verstopfungserkennung in einzelnen, mehreren oder sämtlichen Strömungspfaden, welche eine Mehrzahl von Sonden aufweist, die jeweils in einen der Strömungspfade eingebracht und dazu ausgelegt sind, ein vom Förderstrom im Strömungspfad abhängiges Messsignal abzugeben, sowie eine elektronische Auswerteeinheit, die dazu eingerichtet ist, die von den Sonden abgegebenen Messsignale aufzunehmen, untereinander abzugleichen und aufgrund von hierbei festgestellten Signalabweichungen einzelne oder mehrere Strömungspfade als verstopft zu identifizieren. Die Erfindung macht sich hierbei die Erkenntnis zunutze, dass die zuverlässigste Art der Erkennung einer Verstopfung im Strömungspfad unmittelbar dort erfolgen kann, wo die Verstopfung selbst auftritt. Dies wird erfindungsgemäß durch ein Gerät mit den Merkmalen des Anspruchs 1 erreicht. Ein besonderer Vorteil der Erfindung zeigt sich darin, dass die von den Sonden abgegebenen Messsignale untereinander verglichen werden, und die Auswerteeinheit das Verstopfen einzelner Leitungen zuverlässig daran erkennen kann, dass einzelne Messsignale durch Signalabweichung aus der Masse der abgeglichenen Messsignale herausstechen. Dieses Vorgehen ist deshalb so zuverlässig, weil eine Vorab-Kalibrierung der Sonden unnötig ist. Beim Ausbringen sowohl von Mischfluid wie beispielsweise Gülle als auch beim Ausbringen von Schüttgut, was technisch gesehen als eine Mischung von Luft oder Gas und Schüttgut aufgefasst werden muss, kommt es aufgrund sich ständig ändernder Betriebsbedingungen zu Schwankungen im Förderstrom. Diese Schwankungen können zum einen der global von der Verteilvorrichtung an alle Leitungen abgegebene Volumenstrom, und zum anderen die Temperatur und Zusammensetzung des Förderguts, oder der Druck des Förderguts sein.

Diese Schwankungen haben auch Einfluss auf die von den Sonden erfassten Messsignale. Diese Schwankungen müssten bei Verwendung einer kalibrierbedürftigen Technik in jene Kalibrierung mit einbezogen werden, was technisch aufwändig erscheint. Da aber erfindungsgemäß die von allen Sonden gelieferten Signale miteinander abgeglichen werden, liefern diese in ihrer Gesamtheit einen mehr oder weniger scharfen "Normalbereich". Sobald aber einzelne Strömungspfade teilweise oder vollständig verstopft werden, werden sich die von den dort jeweils platzierten Sonden erhaltenen Messsignale im Vergleich zu den übrigen Messsignalen der umliegenden Strömungspfade deutlich unterscheiden. Dies wird von der Auswerteeinheit ungeachtet der sonstigen, alle Strömungspfade betreffenden Schwankungen erkannt. Aus diesem Grund ist die erfindungsgemäße Verstopfungserkennung besonders robust.

Vorzugsweise weisen die Sonden jeweils einen mit einer Spannung beaufschlagbaren stromdurchflossenen Leiter auf, der wärmeleitend mit dem Strömungspfade verbunden ist.

Der stromdurchflossene Leiter weist hierbei einen Durchgangswiderstand auf, der sich in Abhängigkeit der Temperatur ändert, insbesondere mit steigender Temperatur zunimmt. Vorzugsweise ist der Durchgangswiderstand als PTC Widerstandselement ausgebildet, das sonst auch zur Strombegrenzung von elektronischen Baugruppen, insbesondere zur Kurzschlusssicherung eingesetzt wird. Der Widerstandswert des Durchgangswiderstands liegt bei 20°C bei etwa 100 Ohm. Bei ca. 60 °C erreicht der Durchgangswiderstand einen stabilen Arbeitspunkt, d.h. der Widerstand ist so groß, dass sich die Temperatur bei 60°C hält. Wird mehr Energie an das vorbeiströmende Fördergut abgeführt, senkt sich der Widerstand und es wird dem System mehr elektrische Energie zugeführt um den Arbeitspunkt bei 60°C zu halten. Dieser Strom (ca. 20 mA bei 12 V) wird vorzugsweise ausgewertet.

Die Arbeitsweise der so ausgebildeten Sonden ist im Wesentlichen die Folgende: Eine Verstopfung im Strömungspfad führt zu einer Störung bzw. Veränderung der Strömung. Somit wird im gesamten Strömungspfad zwischen der Verteilvorrichtung und der Ausbringvorrichtung die quantitative und qualitative Ausbildung der Strömung beeinflusst. Abhängig von der Schwere der Verstopfung ändert sich die Geschwindigkeit und Phasenzusammensetzung der Strömung. Der stromdurchflossene Leiter im Strömungspfad wird aufgrund der angelegten Spannung erwärmt. Weil der stromdurchflossene Leiter ferner mit dem Medium im Strömungspfad thermisch in Kontakt steht, findet bei einem Temperaturunterschied zwischen dem Fördergut (Mischfluid oder Schüttgut) und dem Leiter selbst ein Wärmetransport statt. Der Durchgangswiderstand des stromdurchflossenen Leiters ändert sich in Abhängigkeit des Wärmetransports zwischen dem Leiter und dem Fluid. Bei im Wesentlichen konstanten Strömungsbedingungen im Strömungspfad stellt sich hinsichtlich des im stromdurchflossenen Leiter gemessenen Stroms, seines Widerstands und der Temperatur ein Gleichgewichtszustand ein. Ändert sich aber die zwischen dem stromdurchflossenen Leiter und dem Strömungspfad auftretende Wärmeübergabe durch eine Veränderung der Strömungsgeschwindigkeit, Phasenzusammensetzung und anderer Symptome, die beim Verstopfen des Strömungspfades eintreten, verändert sich dieser Gleichgewichtszustand hin zu einer anderen Stromstärke, weil sich der Widerstand des stromdurchflossenen Leiters ändert.

Demzufolge repräsentieren die jeweils von den Sonden abgegebenen Messsignale vorzugsweise die jeweilige Stromstärke in dem stromdurchflossenen Leiter, und die elektronische Auswerteeinheit ist dazu eingerichtet, aus den aufgenommenen Messsignalen einen Mittelwert zu bilden, einzelne der Messsignale mit dem gebildeten Mittelwert zu vergleichen, und bei Erreichen oder Überschreiten einer vorbestimmten Abweichung von dem gebildeten Mittelwert ein Verstopfungssignal zu erzeugen. Die notwendige Abweichung, um ein solches Verstopfungssignal zu erzeugen, liegt vorzugsweise in einem Bereich von 3% und darüber, vorzugsweise 5% und darüber.

In einer bevorzugten Ausführungsform der Erfindung weist die Einrichtung zur Verstopfungserkennung Mittel zur Tonerzeugung auf, und ist dazu eingerichtet, bei Vorliegen eines Verstopfungssignals ein akustisches Warnsignal abzugeben.

In einer weiteren bevorzugte Ausführungsform weist die Einrichtung zur Verstopfungserkennung Anzeigemittel, insbesondere eine Leuchttafel mit Leuchtmitteln für jeden mit Sonden versehenen Strömungspfad, und/oder ein Displaygerät auf und ist dazu eingerichtet, bei Vorliegen des Verstopfungssignals den betreffenden Strömungspfad visuell anzuzeigen.

Alternativ oder zusätzlich ist die Einrichtung zur Verstopfungserkennung vorzugsweise mit Mitteln zur Datenfernübertragung ausgestattet und dazu eingerichtet, die aufgenommenen Messsignale und/oder die Verstopfungssignale an eine Fernwartungs- und/oder Fernsteuerungsstelle zu übertragen. Hiermit wird es möglich, auch bei teilautomatisiertem oder vollständig automatisiertem Betrieb des erfindungsgemäßen Verteilgerätes das Auftreten von Fehlfunktionen genau zu protokollieren, um nachträglich an den protokollierten, und idealerweise kartographierten Fehlerstellen mittels nachträglichem Ausbringen von Mischfluid bzw. Schüttgut nacharbeiten zu können. Alternativ kann der Ausbringbetrieb gestoppt werden, um manuell die Verstopfung zu beseitigen, bevor der Betrieb fortgesetzt wird.

In einer besonders bevorzugten Ausgestaltung der Erfindung weisen die Sonden jeweils ein wärmeleitfähiges Sensorelement auf, welches in einer thermisch leitfähigen Messkappe angeordnet ist. Vorzugsweise ist die Messkappe dazu eingerichtet, das Sensorelement mechanisch von dem Strömungspfad zu isolieren.

Der Werkstoff der Messkappe und/oder des Sensorelements wird vorzugsweise danach ausgewählt, dass sein Wärmedurchgangskoeffizient der Wärmeübertragung mit dem Medium möglichst hoch ist. Dazu muss der Werkstoff der Messkappe eine möglichst hohe Wärmeleitfähigkeit besitzen. Weitere Anforderungen sind mechanische (Abriebs-) und chemische (Korrosions-) Beständigkeit gegen das verwendete Fördergut, des Weiteren gute Bearbeitbarkeit und vertretbare Kosten. Als vorteilhaft hat sich hierbei beispielsweise Messing herausgestellt, da es diese teils konkurrierenden Anforderungen erfüllt.

Unter einer mechanischen Isolierung wird hierbei insbesondere verstanden, dass das Sensorelement vor mechanischer Beschädigung aufgrund von Partikeln im Fördergut geschützt wird.

Vorzugsweise ist zwischen der Messkappe und dem Sensorelement Wärmeleitpaste zur wärmeleitenden Verbindung zwischen dem Sensorelement und dem Strömungspfad angeordnet. In einer bevorzugten alternativen Ausgestaltung ist in der Messkappe ein Messfenster vorgesehen, in welchem das Sensorelement angeordnet ist, so dass das Sensorelement direkten Kontakt zum Fördergut aufnehmen kann. In diesem Fall isoliert die Messkappe das Sensorelement nicht vollständig mechanisch vom Strömungspfad, bildet aber zumindest einen mechanischen Stützkörper aus, der das Sensorelement stabilisiert.

Zur Signalabgabe von dem Sensorelement an die elektronische Auswerteeinheit ist erfindungsgemäß ein Anschlusskabel vorgesehen und an das Sensorelement angeschlossen.

Ferner wird vorzugsweise das Anschlusskabel von einem Halteschlauch umhüllt und zugentlastet. Es ist nicht auszuschließen, dass im Betrieb am Sensorelement im Strömungspfad eine Zugbelastung auf die Sonde ausgeübt wird. Durch eine Zugentlastung wird die Beschädigung des Sensorelementes oder schlimmstenfalls die Unterbrechung des vom Strom durchflossenen Leiter gebildeten Stromkreises verhindert.

Der Halteschlauch der Sonde weist vorzugsweise im Vergleich zum Sensorelement und Anschlusskabel eine verminderte Wärmeleitfähigkeit auf. Besonders bevorzugt liegt die Wärmeleitfähigkeit im Bereich von 0,5 W/Km oder weniger, vorzugsweise 0,3 W/Km oder weniger. Ein beispielhafter Halteschlauch in Form eines Druckluftschlauchs aus Polyurethan mit einem Außendurchmesser von 4 mm und einer Wandstärke von 0,75 mm weist eine Wärmeleitfähigkeit von etwa 0,25 W/Km auf.

Die verminderte Wärmeleitfähigkeit des Halteschlauchs hat insbesondere den Vorteil, dass mit ihr Einflüsse von der Umgebung auf das Sensorelement abgemildert werden. Der Halteschlauch, der das Anschlusskabel vollständig umhüllt, stellt die Schnittstelle zwischen der Sonde und der Umgebung dar, weil der Halteschlauch an irgendeiner Stelle aus dem Strömungspfad herausgeführt werden muss. Je besser der Halteschlauch eine Wärmeübertragung verhindert, desto geringer sind die Umwelteinflüsse von außerhalb des Strömungspfades auf die Sonde.

Erfindungsgemäß ist die Sonde von der Stelle ihres Eintritts in den Strömungspfad aus stromabwärts gerichtet, und erstreckt sich vorzugsweise mit einer Länge im Bereich von 10 bis 50 cm, besonders bevorzugt im Bereich von 20 bis 30 cm in den Strömungspfad stromabwärts. Ein Vorteil der Ausrichtung der Sonde in dieser Weise wird darin gesehen, dass eine möglichst geringe Beeinflussung des Strömungsfeldes innerhalb des Strömungspfads erzeugt wird. Eine Beabstandung der Sonde von ihrer eigentlichen Eintrittsstelle ist auch deswegen vorteilhaft, weil beispielsweise im Bereich der Fluid- bzw. Schüttgutabgänge im Bereich der Verteilvorrichtung im Verstopfungsfall eine Strömungsrezirkulation einsetzen kann, die der Sonde folglich zunächst eine "normale" Strömung vermittelt, obwohl weiter stromabwärts bereits eine Verstopfung eingetreten ist. Ein Beabstanden der Sondenspitze, die beispielsweise durch die Messkappe gebildet werden kann, von der eigentlichen Eintrittsstelle ermöglicht es also, den für die Messung aktiven Bereich der Sonde an die Stelle zu verlegen, wo tatsächlich eine Verstopfung ungeachtet eventueller Strömungsrezirkulation erwartet wird. Die Messstelle kann mit anderen Worten an einen Ort gelegt werden, an dem die Strömungsveränderungen bei einer Verstopfung ausgeprägt und gut messbar sind.

Bei der Verwendung einer erfindungsgemäßen Verstopfungsmesseinrichtung an Verteilgeräten zur Ausbringung von Schüttgut wie beispielsweise Saatgut oder Mineraldünger wird es bevorzugt, die Sonde so weit in den Strömungspfad einzuführen, dass in unmittelbarer Nähe der Ausbringvorrichtung gemessen werden kann. Hintergrund ist der, dass sich bei Verwendung eines solchen Gutes eine Verstopfung nur über eine kurze Strecke zurückstaut. Innerhalb dieser Rückstaustrecke wäre eine Verstopfung mit Hilfe der erfindungsgemäßen Vorrichtung besser zu erfassen, weil weiter stromaufwärts die Mischung aus Luft und Schüttgut am Ende der Rückstaustrecke nur umgelenkt wird, und die thermische Interaktion mit dem Sensor sich dort weniger stark ändert.

Bei der Einbringung der Sonde in den Strömungspfad ist darauf zu achten, dass negative Beeinflussungen des Strömungsbildes im Strömungspfad möglichst verhindert werden. Hierbei soll auf Kanten verzichtet werden, die gegen die Strömungsrichtung hervorstehen, auch um ein Verhaken von Fremdkörpern und Faserstoffen möglichst zu vermeiden. Dementsprechend wird vorzugsweise entlang jeweils eines Strömungspfades ein Schlauchstutzen mit einem Anschlussabschnitt vorgesehen, auf den die Fluid- bzw. Schüttgutleitung aufgeschoben ist, wobei die Sonde mit einem Abschnitt des Halteschlauchs zwischen der Fluid- bzw. Schüttgutleitung und dem Schlauchstutzen hindurchgeführt ist, und wobei die Fluid- bzw. Schüttgutleitung den Schlauchstutzen und den Halteschlauch fluiddicht umschließt.

Vorzugsweise ist der jeweilige Schlauchstutzen an einem der Schüttgutabgänge der Verteilvorrichtung, oder an einem der Anschlussabschnitte zur Kopplung mit der Ausbringvorrichtung, oder an einer Stelle entlang der Fluidleitung angeordnet.

Bei Ausbringvorrichtungen und Verteilgeräten, die beispielsweise mit der CFC-Technologie der Hugo Vogelsang GmbH (CFC = ComfortFlowControl) ausgerüstet sind, sind solche Schlauchstutzen ohnehin vorhanden, so dass diese Systeme mit besonders geringem Aufwand auch nachgerüstet werden können, um eine erfindungsgemäße Verstopfungserkennung zu erhalten.

Die vorstehend genannten bevorzugten Ausführungsformen gelten gleichermaßen für Geräte zum Verteilen von Mischfluid wie beispielsweise Gülle, aber auch für Geräte zum Verteilen von Schüttgut wie beispielsweise Saatgut oder Mineraldünger. Wenn im Folgenden jeweils nur von einem dieser beiden Anwendungsfälle gesprochen wird, so ist hierunter auch zu verstehen, dass die entsprechenden Ausführungen für den anderen Anwendungsfall auch Gültigkeit haben.

In einer bevorzugten Ausgestaltung ist die elektronische Auswerteeinheit dazu eingerichtet, die von den Sonden abgegebenen Messsignale aufzunehmen, untereinander abzugleichen, und aufgrund von hierbei festgestellten Signalabweichungen Abweichungen in der Verteilgenauigkeit zu identifizieren. Alternativ oder zusätzlich zu einer Verstopfungserkennung ist die Vorrichtung gemäß der Erfindung in der Lage, qualitativ zu erfassen, ob und wie stark die Fördermenge in einzelnen Strömungspfaden von der Fördermenge in anderen Strömungspfaden abweicht. Hierzu macht sich die Erfindung die gleiche Erkenntnis zunutze, wie eingangs mit Bezug auf die Verstopfungserkennung ausgeführt wurde. Die Abweichungen untereinander können mittels Signalabgleich festgestellt werden, ohne hierfür jeden Sensor für jedes Medium und jegliche Betriebsparameter eichen zu müssen, was für eine Absolutmessung erforderlich wäre. Sobald ein vorbestimmter Variationskoeffizient nicht mehr eingehalten wird, ist die Auswerteeinheit vorzugsweise dazu eingerichtet, die abweichenden Strömungspfade kenntlich zu machen, damit beispielsweise eine Umstellung der Arbeitsweise des angeschlossenen Verteilers vorgenommen werden kann.

Die Erfindung wird im Folgenden unter Bezugnahme auf die beigefügten Figuren anhand eines bevorzugten Ausführungsbeispiels näher beschrieben. Hierbei zeigen:
- Figur 1: ein erfindungsgemäßes Verteilgerät gemäß dem bevorzugten Ausführungsbeispiel mit daran angeschlossenen Ausbringvorrichtungen,
- Figur 2: eine Detailansicht einer Sonde der Einrichtung zur Verstopfungserkennung, und
- Figuren 3a-c: verschiedene Einbauszenarien der Sonde gemäß Figur 2 in dem Verteilgerät gemäß dem bevorzugten Ausführungsbeispiel.

Der strukturelle Aufbau des im Folgenden näher beschriebenen Gerätes ist für den Anwendungsfall der Mischfluidförderung im Wesentlichen der Gleiche wie für den Anwendungsfall der Schüttgutförderung.

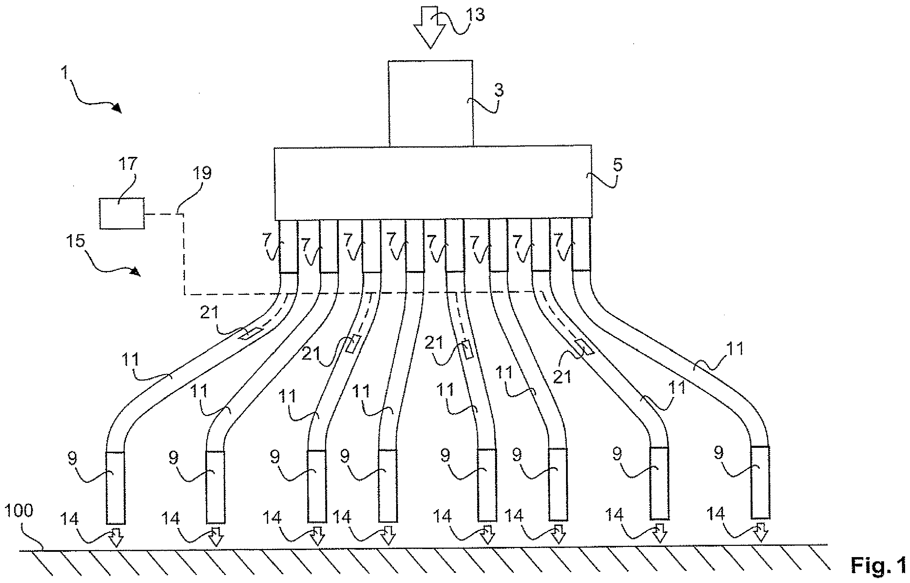

Figur 1 zeigt eine schematische Darstellung eines erfindungsgemäßen Verteilergerätes nach einem bevorzugten Ausführungsbeispiel.

Das in Figur 1 gezeigte Gerät 1 weist eine Verteilvorrichtung 5 auf. Die Verteilvorrichtung 5 weist einen Schüttguteingang 3 zum Anschluss an eine Fördergutzuführung für Schüttgüter auf. Die Verteilvorrichtung 5 kann eine Verteilvorrichtung bekannter Art sein und umfasst Mittel zum Dosieren und gleichmäßigen Verteilen des zugeführten Fördergutes an eine Vielzahl von Schüttgutabhängen 7.

An das Gerät 1 ist eine Vielzahl von Ausbringvorrichtungen 9 angeschlossen. Die Ausbringvorrichtungen 9 sind mit den Abgängen 7 jeweils mittels einer Schüttgutleitung 11 verbunden. Durch die Abgänge 7 und Leitungen 11 ist eine Vielzahl von Strömungspfaden von der Verteilvorrichtung 5 zu den Ausbringvorrichtungen 9 definiert.

Die Ausbringvorrichtungen 9 sind dazu eingerichtet, nach allgemein bekannter Art das geförderte Schüttgut in Richtung der Pfeile 14 auf eine landwirtschaftliche Nutzfläche 100 abzugeben. Dies bedingt, dass dem Gerät 1 zuvor entsprechendes Fördergut in Richtung des Pfeils 13 zugeführt wird.

Das Gerät 1 gemäß Figur 1 weist ferner eine Einrichtung 15 zur Verstopfungserkennung auf. Die Einrichtung 15 zur Verstopfungserkennung umfasst eine elektronische Auswerteeinheit 17 und eine Mehrzahl Sonden 21. Die Sonden 21 sind mittels Leitungen 19 kommunizierend mit der elektronischen Auswerteeinheit 17 verbunden. Je nachdem, ob die Sonden 21 einen eigenen Signalwandler aufweisen oder nicht, können die Leitungen 19 als Strom- oder Datenleitung ausgebildet sein. Die Sonden 21 sind jeweils in einen Strömungspfad eingebracht und dazu ausgelegt, ein vom Förderstrom im Strömungspfad abhängiges Messsignal abzugeben. Die elektronische Auswerteeinheit 17 ist dazu eingerichtet, die von den Sonden 21 abgegebenen Messsignale aufzunehmen, untereinander abzugleichen und aufgrund von hierbei festgestellten Signalabweichungen einzelne oder mehrere Strömungspfade als verstopft zu identifizieren.

In dem in Figur 1 gezeigten Ausführungsbeispiel sind nicht alle Strömungspfade mit Sonden 21 versehen, sondern nur einige. Je nach Umfang der Menge an Strömungspfaden, die an dem Gerät 1 vorgesehen sind, kann es sinnvoll sein, entweder alle Strömungspfade mit Sonden zu versehen, oder jeweils mehrere Strömungspfade zu bündeln und innerhalb dieser Bündel nur einen Strömungspfad mit einer Sonde zu versehen, um Kosten zu sparen. Dies kann insbesondere in Anwendungsfällen Sinn machen, wo erfahrungsgemäß nicht bloß eine Ausbringvorrichtung oder nur ein Strömungspfad verstopfen, sondern erfahrungsgemäß immer gleich mehrere nebeneinanderliegende zumindest teilweise verstopfen.

Eine bestmögliche Informationsdichte erhält man allerdings, wenn jeder Strömungspfad mindestens eine Sonde aufweist.

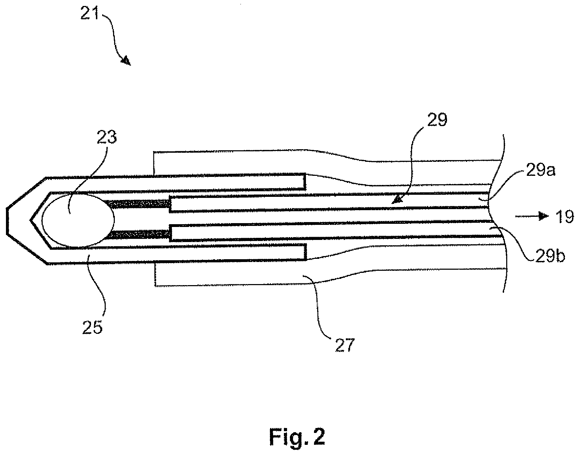

In Figur 2 ist ein Detail einer Sonde 21 gemäß Figur 1 gezeigt. Die Sonde 21 weist ein Sensorelement 23 auf, welches zum Wärmeaustausch mit dem die Sonde 21 umgebenden Fördergut (Mischfluid oder Schüttgut) eingerichtet ist. Das Sensorelement 23 ist von einer Messkappe 25 eingehaust, die das Sensorelement 23 vor mechanischen Beeinträchtigungen schützen soll. Die Messkappe 25 ist ebenfalls ausreichend wärmeleitfähig, und weist ggfs. ein Messfenster für das Sensorelement zum vereinfachten Kontaktieren des Förderguts im Strömungspfad auf.

Die Sonde 21 weist einen stromdurchflossenen Leiter 29 auf, der vorzugsweise durch zwei Adern 29a, b eines Anschlusskabels ausgebildet ist. Das Anschlusskabel 29a, b ist zur Signalabgabe an die elektronische Auswerteeinheit mit der Leitung 19 verbunden (Figur 1).

Ein Teil der Messkappe 25 sowie des Anschlusskabels 29a, b ist von einem Halteschlauch 27 umhüllt und fluiddicht abgeschlossen. Vorzugsweise ist das Anschlusskabel 29a, b zugentlastet innerhalb des Halteschlauchs 27 angeordnet. Der Halteschlauch 27 ist ferner vorzugsweise dazu eingerichtet, die Sonde 21 thermisch von ihrer Umgebung außerhalb des Strömungspfades zu isolieren.

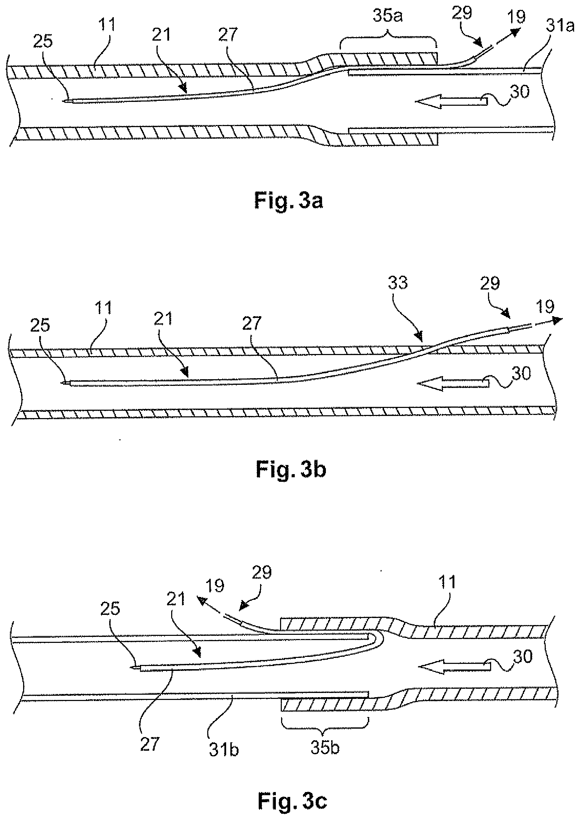

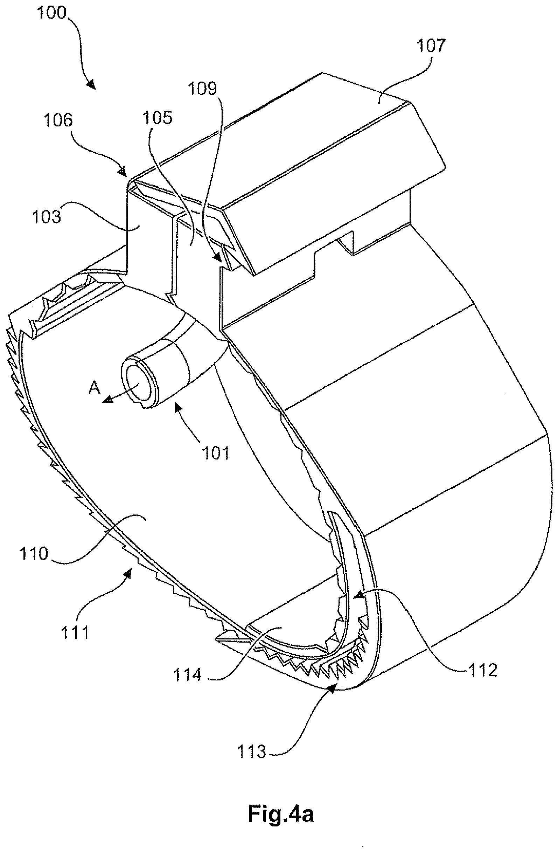

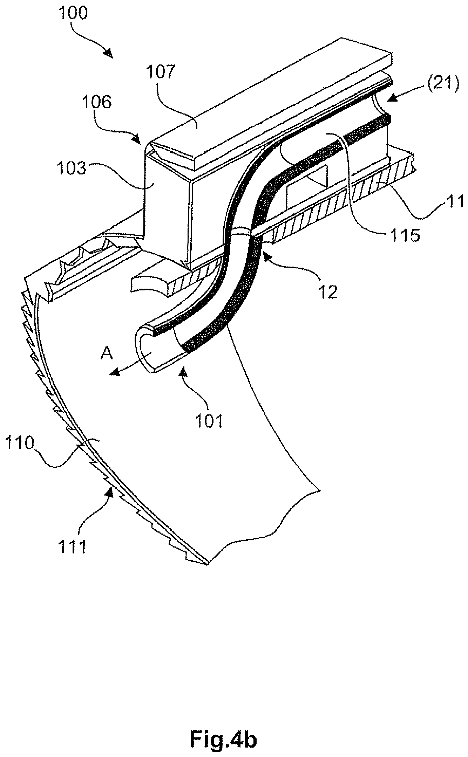

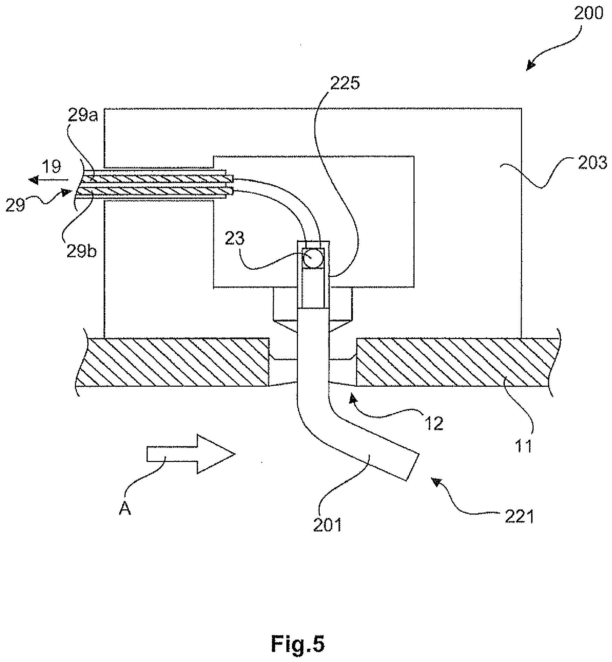

Verschiedene Einbringungsmöglichkeiten der Sonde 21 in den Strömungspfad sind in den Figuren 3a bis c dargestellt.

Figur 3a zeigt eine erste bevorzugte Einbringungsmöglichkeit der Sonde 21 in den Strömungspfad. Die Sonde 21 ist hierbei in einen Anschlussabschnitt 35a zwischen einem Schlauchstutzen 31a und der Schüttgutleitung 11 hindurch in den Strömungsabschnitt eingeführt. Der Schlauchstutzen 31a ist hierbei vorzugsweise an einem Schüttgutabhang der Verteilvorrichtung angeordnet.

Die Sonde 21 erstreckt sich von der Einbringungsstelle stromabwärts in Richtung des Pfeils 30 entlang des Strömungspfades. Der Halteschlauch 27 isoliert die Sonde 21 thermisch von der Leitung 11 und dem Schlauchstutzen 31a. Die Messkappe 25 ist vorzugsweise so weit von dem Anschlussabschnitt 35a beabstandet, dass eine möglicherweise im Falle einer Verstopfung in der Nähe des Schlauchstutzens 31a auftretende Zirkelströmung die Messkappe 25 der Sonde 21 nicht erreicht.

Figur 3b zeigt im Wesentlichen die gleichen strukturellen Elemente bezüglich des Strömungspfades und der Sonde 21. Im Unterschied zum Aufbau gemäß Figur 3a ist die Sonde 21 allerdings nicht an einem Schlauchstutzen, sondern an einer im Prinzip beliebig wählbaren Stelle entlang des Strömungspfades durch eine angepasste Bohrung 33 (nicht im Detail dargestellt) in den Strömungspfad eingeführt. Der Halteschlauch 27 liegt vorzugsweise fluiddicht in der Bohrung 33.

Wie in Figur 3a ist das Anschlusskabel des stromdurchflossenen Leiters 29 aus dem Strömungspfad herausgeführt und (in nicht dargestellter Weise) mit der Leitung 19 zur Auswerteeinheit 17 hin verbunden (Figur 1).

In der Konstellation gemäß Figur 3c ist die Sonde 21 in einem Anschlussabschnitt 35b eines Schlauchstutzens 31b zwischen dem Schlauchstutzen 31b und der Leitung 11 hindurchgeführt. Der Schlauchstutzen 31b ist vorzugsweise an einem Anschlussabschnitt zur Kopplung mit einer Ausbringvorrichtung angeordnet. Die Sonde 21 wird nach dem Einbringen in Richtung des Strömungspfades stromabwärts umgelenkt und erstreckt sich sodann in dessen Richtung. Ansonsten ähnelt der strukturelle Aufbau demjenigen aus Figur 3a.

Es folgt eine Liste weiterer nicht erfindungsgemäßen Ausführungsformen.
Ausführungsform 1: Gerät zum Verteilen eines Mischfluids, insbesondere von Gülle oder Flüssigmist, auf landwirtschaftliche Nutzflächen, mit
   - einer Verteilvorrichtung , die mindestens einen an eine Mischfluidzuführung anschließbaren Fluideingang und eine Mehrzahl Fluidabgänge aufweist,
   - einer Mehrzahl mit den Fluidabgängen verbundener Fluidleitungen zum Verteilen des Mischfluids auf eine vorbestimmte Arbeitsbreite, wobei die Fluidleitungen an ihrem stromabwärtsseitigen Ende jeweils einen Anschlussabschnitt zur Kopplung mit einer Ausbringvorrichtungen aufweisen, wobei die Ausbringvorrichtung insbesondere zum Abgeben des Mischfluids in Richtung der Nutzflächen eingerichtet ist,
   - wobei jeweils ein Fluidabgang und die mit dem Fluidabgang verbundene Fluidleitung einen Strömungspfad definieren,
      gekennzeichnet durch eine Einrichtung zur Verstopfungserkennung in einzelnen, mehreren oder sämtlichen Strömungspfaden, welche
   - eine Mehrzahl von Sonden, die jeweils in einen der Strömungspfade eingebracht und dazu ausgelegt sind, ein vom Förderstrom im Strömungspfad abhängiges Messsignal abzugeben, sowie
   - eine elektronische Auswerteeinheit aufweist, die dazu eingerichtet ist, die von den Sonden abgegebenen Messsignale aufzunehmen, untereinander abzugleichen, und aufgrund von hierbei festgestellten Signalabweichungen einzelne oder mehrere Strömungspfade als verstopft zu identifizieren.
Ausführungsform 2: Gerät nach Ausführungsform 1,
   wobei die Sonden jeweils einen mit einer Spannung beaufschlagbaren stromdurchflossenen Leiter aufweisen, der wärmeleitend mit dem Strömungspfad verbunden ist.
Ausführungsform 3: Gerät nach Ausführungsform 2,
   wobei der stromdurchflossene Leiter einen Durchgangswiderstand aufweist, der sich in Abhängigkeit der Temperatur ändert, insbesondere mit steigender Temperatur zunimmt.
Ausführungsform 4: Gerät nach Ausführungsform 2 oder 3,
   wobei die jeweils von den Sonden abgegebenen Messsignale die jeweilige Stromstärke in dem stromdurchflossenen Leiter repräsentieren, und die elektronische Auswerteeinheit dazu eingerichtet ist, aus den aufgenommenen Messsignalen einen Mittelwert zu bilden, einzelne der Messsignale mit dem gebildeten Mittelwert zu vergleichen, und bei Erreichen oder Überschreiten einer vorbestimmten Abweichung von dem gebildeten Mittelwert ein Verstopfungssignal zu erzeugen.
Ausführungsform 5: Gerät nach Ausführungsform 4,
   wobei die Einrichtung zur Verstopfungserkennung Mittel zur Tonerzeugung aufweist und dazu eingerichtet ist, bei Vorliegen des Verstopfungssignals ein akustisches Warnsignal abzugeben.
Ausführungsform 6: Gerät nach Ausführungsform 4 oder 5,
   wobei die Einrichtung zur Verstopfungserkennung Anzeigemittel, insbesondere eine Leuchttafel mit Leuchtmitteln für jeden mit Sonden versehenen Strömungspfad und/oder ein Displaygerät, aufweist und dazu eingerichtet ist, bei Vorliegen des Verstopfungssignals den betreffenden Strömungspfad visuell anzuzeigen.
Ausführungsform 7: Gerät nach einer der vorstehenden Ausführungsformen,
   wobei die Einrichtung zur Verstopfungserkennung Mittel zur Datenfernübertragung aufweist und dazu eingerichtet ist, die aufgenommenen Messsignale und/oder die Verstopfungssignale an eine Fernwartungs- und/oder Fernsteuerungsstelle zu übertragen.
Ausführungsform 8: Gerät nach einer der vorstehenden Ausführungsformen ,
   wobei die Sonden jeweils ein wärmeleitfähiges Sensorelement aufweisen, welches in einer thermisch leitfähigen Messkappe angeordnet ist, wobei die Messkappe dazu eingerichtet ist, das Sensorelement mechanisch von dem Strömungspfad zu isolieren.
Ausführungsform 9: Gerät nach einer der vorstehenden Ausführungsformen,
   wobei zwischen der Messkappe und dem Sensorelement Wärmeleitpaste zur wärmeleitenden Verbindung zwischen dem Sensorelement und dem Strömungspfad angeordnet ist.
Ausführungsform 10: Gerät nach einer der vorstehendenAusführungsformen,
   wobei zur Signalabgabe an die elektronische Auswerteeinheit ein Anschlusskabel (an das Sensorelement angeschlossen ist.
Ausführungsform 11: Gerät nach Ausführungsform 10,
   wobei das Anschlusskabel von einem Halteschlauch umhüllt und vorzugsweise zugentlastet ist.
Ausführungsform 12: Gerät nach Ausführungsform 11,
   wobei der Halteschlauch eine im Vergleich zum Sensorelement und Anschlusskabel verminderte Wärmeleitfähigkeit aufweist,
Ausführungsform 13: Gerät nach einer der Ausführungsformen 10 bis 12,
   wobei die Sonde von der Stelle ihres Eintritts in den Strömungspfad aus stromabwärts gerichtet ist, und sich vorzugsweise mit einer Länge im Bereich von 10 bis 50 cm, besonders bevorzugt im Bereich von 20 bis 30 cm in dem Strömungspfad stromabwärts erstreckt.
Ausführungsform 14: Gerät nach einer der Ausführungsformen 10 bis 13,
   wobei entlang jeweils eines Strömungspfades ein Schlauchstutzen mit einem Anschlussabschnitt vorgesehen ist, auf den die Fluidleitung aufgeschoben ist, wobei die Sonde mit einem Abschnitt des Halteschlauchs zwischen der Fluidleitung und dem Schlauchstutzen hindurchgeführt ist, und wobei die Fluidleitung den Schlauchstutzen und den Halteschlauch fluiddicht umschließt.
Ausführungsform 15: Gerät nach Ausführungsform 14,
   wobei jeweils der Schlauchstutzen an einem der Fluidabgänge der Verteilvorrichtung, oder an einem der Anschlussabschnitte zur Kopplung mit der Ausbringvorrichtung, oder an einer Stelle entlang der Fluidleitung angeordnet ist.
Ausführungsform 16: Gerät nach einer der Ausführungsformen 10 bis 13,
   wobei entlang jeweils eines Strömungspfades eine an den Halteschlauch angepasste Bohrung angeordnet ist, durch welche die Sonde mit einem Abschnitt des Halteschlauchs hindurchgeführt ist, wobei die Bohrung und der Halteschlauch vorzugsweise fluiddicht gegeneinander anliegen.
Ausführungsform 17: Gerät nach einer der vorstehenden Ausführungsformen,
   wobei die elektronische Auswerteeinheit dazu eingerichtet ist, die von den Sonden abgegebenen Messsignale aufzunehmen, untereinander abzugleichen, und aufgrund von hierbei festgestellten Signalabweichungen Abweichungen in der Verteilgenauigkeit zu identifizieren.
Ausführungsform 18: Gerät nach einer der vorstehenden Ausführungsformen,
   mit mindestens einer Schelle, welche um eine der Leitungen herum montiert ist,
   wobei die Schelle einen sich durch eine korrespondierende Öffnung in der Leitung hindurch in den Strömungspfad erstreckenden Vorsprung aufweist.
Ausführungsform 19: Gerät nach Ausführungsform 18,
   wobei die Schelle einen Einführabschnitt zur Aufnahme der Sonde und eine sich bis zum Vorsprung erstreckende Durchführung für die Sonde aufweist.
Ausführungsform 20: Gerät nach Ausführungsform 18,
   wobei der Vorsprung der Schelle als thermisch leitfähige Messkappe ausgebildet ist und vorzugsweise abschnittsweise oder vollständig aus einem Metall, insbesondere Hartmetall besteht.
Ausführungsform 21: Gerät zum Verteilen von Schüttgut, insbesondere Saatgut, auf landwirtschaftliche Nutzflächen, mit
   - einer Verteilvorrichtung, die mindestens einen an eine Schüttgutzuführung anschließbaren Schüttguteingang und eine Mehrzahl Schüttgutabgänge aufweist,
   - einer Mehrzahl mit den Schüttgutabgängen verbundener Schüttgutleitungen zum Verteilen des Schüttguts auf eine vorbestimmte Arbeitsbreite, wobei die Schüttgutleitungen an ihrem stromabwärtsseitigen Ende jeweils einen Anschlussabschnitt zur Kopplung mit einer Ausbringvorrichtung aufweisen, wobei die Ausbringvorrichtung insbesondere zum Abgeben des Schüttgutes in Richtung der Nutzflächen eingerichtet ist,
   - wobei jeweils ein Schüttgutabgang und die mit dem Schüttgutabgang verbundene Schüttgutleitung einen Strömungspfad definieren,
      gekennzeichnet durch eine Einrichtung zur Verstopfungserkennung in einzelnen, mehreren oder sämtlichen Strömungspfaden, welche
   - eine Mehrzahl von Sonden, die jeweils in einen der Strömungspfade eingebracht und dazu ausgelegt sind, ein vom Förderstrom im Strömungspfad abhängiges Messsignal abzugeben, sowie
   - eine elektronische Auswerteeinheit aufweist, die dazu eingerichtet ist, die von den Sonden abgegebenen Messsignale aufzunehmen, untereinander abzugleichen, und aufgrund von hierbei festgestellten Signalabweichungen einzelne oder mehrere Strömungspfade als verstopft zu identifizieren.
Ausführungsform 22: Gerät nach Ausführungsform 21,
   ferner mit den Merkmalen nach einer oder mehrerer der Ausführungsformen 1 bis 20.

## Patentansprüche

1. Gerät (1) zum Verteilen von Schüttgut, insbesondere Saatgut, auf landwirtschaftliche Nutzflächen (100), mit
- einer Verteilvorrichtung (5), die mindestens einen an eine Schüttgutzuführung anschließbaren Schüttguteingang und eine Mehrzahl Schüttgutabgänge aufweist,
- einer Mehrzahl mit den Schüttgutabgängen verbundener Schüttgutleitungen zum Verteilen des Schüttguts auf eine vorbestimmte Arbeitsbreite, wobei die Schüttgutleitungen an ihrem stromabwärtsseitigen Ende jeweils einen Anschlussabschnitt (35a,b) zur Kopplung mit einer Ausbringvorrichtung (9) aufweisen, wobei die Ausbringvorrichtung (9) insbesondere zum Abgeben des Schüttgutes in Richtung der Nutzflächen (100) eingerichtet ist,
- wobei jeweils ein Schüttgutabgang und die mit dem Schüttgutabgang verbundene Schüttgutleitung einen Strömungspfad definieren,
- mit einer Einrichtung (15) zur Verstopfungserkennung in einzelnen, mehreren oder sämtlichen Strömungspfaden, welche
- eine Mehrzahl von Sonden (21), die jeweils in einen der Strömungspfade eingebracht und dazu ausgelegt sind, ein vom Förderstrom im Strömungspfad abhängiges Messsignal abzugeben, sowie
- eine elektronische Auswerteeinheit (17) aufweist, die dazu eingerichtet ist, die von den Sonden (21) abgegebenen Messsignale aufzunehmen, untereinander abzugleichen, und aufgrund von hierbei festgestellten Signalabweichungen einzelne oder mehrere Strömungspfade als verstopft zu identifizieren,
**dadurch gekennzeichnet, dass** jede Sonde (21) mindestens eine Schelle (100,200) aufweist, welche um eine der Leitungen (11) herum montiert ist,
wobei die Schelle einen sich durch eine korrespondierende Öffnung (12) in der Leitung (11) hindurch in den Strömungspfad erstreckenden Vorsprung (101,201) aufweist; wobei
- die Schelle (100) einen Einführabschnitt zur Aufnahme der Sonde (21) und eine sich bis zum Vorsprung (101) erstreckende Durchführung (115) für die Sonde (21) aufweist, oder
- der Vorsprung (221) der Schelle (200) als thermisch leitfähige, mit einem Sensor (23) thermisch leitend verbundene Messkappe (225) ausgebildet ist, wobei zur Signalabgabe an die elektronische Auswerteeinheit (17) ein Anschlusskabel (29a,b) an das Sensorelement (23) angeschlossen ist. und
- wobei die Sonde (21) von der Stelle ihres Eintritts in den Strömungspfad aus stromabwärts gerichtet ist, und sich in dem Strömungspfad stromabwärts erstreckt.

2. Gerät (1) nach Anspruch 1,
wobei die Sonden (21) jeweils einen mit einer Spannung beaufschlagbaren stromdurchflossenen Leiter (29) aufweisen, der wärmeleitend mit dem Strömungspfad verbunden ist.

3. Gerät (1) nach Anspruch 2,
wobei der stromdurchflossene Leiter (29) einen Durchgangswiderstand aufweist, der sich in Abhängigkeit der Temperatur ändert, insbesondere mit steigender Temperatur zunimmt.

4. Gerät (1) nach Anspruch 2 oder 3,
wobei die jeweils von den Sonden (21) abgegebenen Messsignale die jeweilige Stromstärke in dem stromdurchflossenen Leiter (29) repräsentieren, und die elektronische Auswerteeinheit (17) dazu eingerichtet ist, aus den aufgenommenen Messsignalen einen Mittelwert zu bilden, einzelne der Messsignale mit dem gebildeten Mittelwert zu vergleichen, und bei Erreichen oder Überschreiten einer vorbestimmten Abweichung von dem gebildeten Mittelwert ein Verstopfungssignal zu erzeugen.

5. Gerät (1) nach einem der vorstehenden Ansprüche,
wobei die Einrichtung (15) zur Verstopfungserkennung Mittel zur Datenfernübertragung aufweist und dazu eingerichtet ist, die aufgenommenen Messsignale und/oder die Verstopfungssignale an eine Fernwartungs- und/oder Fernsteuerungsstelle zu übertragen.

6. Gerät (1) nach einem der vorstehenden Ansprüche,
wobei das Anschlusskabel (29a,b) von einem Halteschlauch (27) umhüllt und vorzugsweise zugentlastet ist.

7. Gerät (1) nach Anspruch 6,
wobei der Halteschlauch (27) eine im Vergleich zum Sensorelement (23) und Anschlusskabel (29a,b) verminderte Wärmeleitfähigkeit aufweist.

8. Gerät (1) nach einem der vorstehenden Ansprüche,
wobei die Sonde (21) von der Stelle ihres Eintritts in den Strömungspfad aus stromabwärts gerichtet ist, und sich mit einer Länge im Bereich von 10 bis 50 cm, bevorzugt im Bereich von 20 bis 30 cm in dem Strömungspfad stromabwärts erstreckt.

9. Gerät nach einem der vorstehenden Ansprüche,
wobei der Vorsprung (221) der Schelle (200) als thermisch leitfähige Messkappe (225) ausgebildet ist und abschnittsweise oder vollständig aus einem Metall, insbesondere Hartmetall besteht.

## Claims

1. Apparatus for distributing a bulk material, in particular seeds or fertilisers on agricultural productive surfaces comprising
- a distribution device (5) having at least one bulk material inlet which can be connected
to a bulk material supply and a plurality of bulk material outlets,
- a plurality of bulk material conduits connected to the bulk material outlets for distribution of the bulk material on to a predetermined working width, wherein the bulk material conduits at their downstream end each have a respective connecting portion for coupling to an application device (9), wherein the application device (9) is adapted in particular for discharge of the bulk material in the direction of the productive surfaces,
- wherein a bulk material outlet and the bulk material conduit connected to the bulk material outlet define a respective flow path,
- a device for blockage detection (15) in individual ones, a plurality of or all flow paths, which has
- a plurality of sensors (21) which are respectively introduced into one of the flow paths and are adapted to output a measurement signal, dependent on the delivery flow in the flow path, and
- an electronic evaluation unit (17) which is adapted to receive the measurement signals output by the sensors (21), compare them to each other and on the basis of signal deviations determined in that case to identify individual ones of or a plurality of flow paths as blocked,
**characterized in that** each sensor comprises at least one clip (100, 200) which is fitted around one of the conduits (11), wherein the clip (100, 200) has a projection (101, 201) extending into the flow path through a corresponding opening in the conduit, wherein
- the clip (100) has an insertion portion for receiving the sensor (21) and a passage (115) means extending as far as the projection (101) for the sensor,
- the projection (221) of the clip (200) is in the form of a measurement cap (225) thermally conductive connected with a sensor (23), wherein for signal output to the electronic evaluation unit a connecting cable (29a, b) is connected to the sensor element (23), and
wherein the sensors (21) are directed from a location of their entry into the respective flow path in a downstream direction.

2. Apparatus (1) according to claim 1 wherein the sensors (21) each have a current-carrying conductor (29) which can be acted upon with a voltage and which is connected to the flow path in heat-conducting relationship.

3. Apparatus (1) according to claim 2 wherein the current-carrying conductor (29) has a volume resistance which changes in dependence on temperature and in particular increases with rising temperature.

4. Apparatus (1) according to claim 2 or claim 3 wherein the measurement signals respectively output by the sensors (21) represent the respective current strength in the current-carrying conductor (29) and the electronic evaluation unit (17) is adapted to form an average value from the received measurement signals, to compare individual ones of the measurement signals to the average value formed, and to produce a blockage signal when a predetermined deviation from the average value formed is reached or exceeded.

5. Apparatus (1) according to any one of the preceding claims,
wherein the blockage detection device (15) is equipped with means for remote data transmission and is arranged to transmit the detected measurement signals and/or the blockage signals to a remote maintenance and/or remote control point.

6. Apparatus (1) according to any one of the preceding claims,
wherein the connecting cable (29a, b) is encased by a holding tube (27) and is preferably strain-relieved.

7. Apparatus (1) according to claim 6,
wherein the holding tube (27) has a thermal conductivity which is reduced in comparison with the sensor element (23) and the connecting cable (29a, b).

8. Apparatus (1) according to any one of the preceding claims,
wherein the sensor (21) extends downstream in the flow path over a length in the range of 10 to 50 cm, particularly preferably in the range of 20 to 30 cm.

9. Apparatus according to any one of the preceding claims,
wherein the projection (221) of the clip (200) is in the form of a thermally conductive measurement cap (225) and preferably portion-wise or completely comprises a metal, in particular hard metal.

## Revendications

1. Appareil (1) servant à distribuer un produit en vrac, en particulier des semences, sur des surfaces utiles agricoles (100), avec
- un dispositif distributeur (5) qui présente au moins une entrée pour produit en vrac pouvant être raccordée à une amenée de produit en vrac et une pluralité de sorties pour produit en vrac,
- une pluralité de conduits pour produit en vrac reliés aux sorties pour produit en vrac, servant à distribuer le produit en vrac sur une largeur de travail prédéfinie, dans lequel les conduits pour produit en vrac présentent, à leur extrémité côté aval, respectivement une section de raccordement (35a,b) destinée à être couplée à un dispositif de déversement (9), dans lequel le dispositif de déversement (9) est conçu en particulier pour envoyer le produit en vrac en direction des surfaces utiles (100),
- dans lequel respectivement une sortie pour produit en vrac et le conduit pour produit en vrac relié à la sortie pour produit en vrac définissent un chemin d'écoulement,
- avec un système (15) servant à identifier une obstruction dans divers, plusieurs ou tous les chemins d'écoulement,
- une pluralité de sondes (21) qui sont introduites respectivement sur l'un des chemins d'écoulement et sont réalisées pour émettre un signal de mesure dépendant du flux refoulé sur le chemin d'écoulement, ainsi que
- une unité d'évaluation électronique (17) qui est conçue pour recevoir, mettre en regard les uns les autres les signaux de mesure envoyés par les sondes (21) et identifier, du fait d'écarts de signal relevés dans le cas présent, divers ou plusieurs chemins d'écoulement comme étant obstrués,
**caractérisé en ce que** chaque sonde (21) présente au moins un collier (100, 200) qui est monté tout autour d'un des conduits (11),
dans lequel le collier présente une partie faisant saillie (101, 201) s'étendant au travers d'une ouverture (12) correspondante dans le conduit (11) sur le chemin d'écoulement ; dans lequel
- le collier (100) présente une section d'introduction servant à recevoir la sonde (21) et un passage (115) s'étendant jusqu'à la partie faisant saillie (101) pour la sonde (21), ou
- la partie faisant saillie (221) du collier (200) est réalisée en tant que capuchon de mesure (225) conducteur thermiquement relié de manière conductrice thermiquement à un capteur (23), dans lequel un câble de raccordement (29a,b) est raccordé à l'élément de capteur (23) pour envoyer des signaux à l'unité d'évaluation électronique (17), et
- dans lequel la sonde (21) est dirigée depuis l'emplacement de son entrée sur le chemin d'écoulement vers l'aval et s'étend en aval sur le chemin d'écoulement.

2. Appareil (1) selon la revendication 1,
dans lequel les sondes (21) présentent respectivement un conducteur (29) traversé par un courant, pouvant être soumis à l'action d'une tension, qui est relié de manière à conduire la chaleur au chemin d'écoulement.

3. Appareil (1) selon la revendication 2,
dans lequel le conducteur (29) traversé par un courant présente une résistance au passage qui varie en fonction de la température, en particulier augmente au fur et à mesure que la température augmente.

4. Appareil (1) selon la revendication 2 ou 3,
dans lequel les signaux de mesure respectivement envoyés par les sondes (21) représentent l'intensité de courant respective dans le conducteur (29) traversé par un courant, et l'unité d'évaluation électronique (17) est conçue pour former, à partir des signaux de mesure enregistrés, une valeur moyenne, comparer certains des signaux de mesure à la valeur moyenne formée et générer, en cas d'atteinte ou de dépassement d'un écart prédéfini par rapport à la valeur moyenne formée, un signal d'obstruction.

5. Appareil (1) selon l'une quelconque des revendications précédentes,
dans lequel le système (15) présente, pour identifier une obstruction, des moyens de télétransmission de données et est conçu pour transmettre les signaux de mesure enregistrés et/ou les signaux d'obstruction à un poste de maintenance à distance et/ou de commande à distance.

6. Appareil (1) selon l'une quelconque des revendications précédentes,
dans lequel le câble de raccordement (29a,b) est gainé par un tuyau flexible de maintien (27) et de préférence est déchargé de toute traction.

7. Appareil (1) selon la revendication 6,
dans lequel le tuyau flexible de maintien (27) présente une conductivité thermique réduite en comparaison avec l'élément de capteur (23) et le câble de raccordement (29a,b).

8. Appareil (1) selon l'une quelconque des revendications précédentes,
dans lequel la sonde (21) est dirigée depuis l'emplacement de son entrée sur le chemin d'écoulement en aval et s'étend avec une longueur dans la plage de 10 à 50 cm, de manière préférée dans la plage de 20 à 30 cm, en aval sur le chemin d'écoulement.

9. Appareil selon l'une quelconque des revendications précédentes,
dans lequel la partie faisant saillie (221) du collier (200) est réalisée en tant que capuchon de mesure (225) conducteur thermiquement et est constituée par endroits ou complètement d'un métal, en particulier d'un métal dur.
